# EUROPÄISCHE PATENTSCHRIFT

(11) **EP 4 102 954 B1**
(45) Veröffentlichungstag und Bekanntmachung des Hinweises auf die Patenterteilung: **11.12.2024**
(21) Anmeldenummer: 21704164.9
(22) Anmeldetag: 28.01.2021
(51) Int. Cl.: A01D 51/00

(54) **VERFAHREN ZUM AUFSAMMELN VON FALLOBST UND ÄHNLICHEN PRODUKTEN**
METHOD FOR GATHERING WINDFALLS AND SIMILAR PRODUCTS
PROCÉDÉ DE RÉCOLTE DE CHABLIS ET PRODUITS SIMILAIRES

(30) Priorität: 12.02.2020 AT 600362020
(43) Veröffentlichungstag der Anmeldung: 21.12.2022
(73) Patentinhaber: Organic Tools GmbH, 1160 Wien (AT)
(72) Erfinder: BERMADINGER, Stefan, 1160 WIEN (AT); BRUNMAYR, David, 2230 GÄNSERNDORF (AT); GRIESBACHER, Lukas Albert, 4320 PERG (AT)
(74) Vertreter: Babeluk Patentanwälte GmbH
(86) Internationale Anmeldenummer: PCT/AT2021/060031
(87) Internationale Veröffentlichungsnummer: WO 2021/159157

(56) Entgegenhaltungen:
- AT-B1- 519 464
- DE-U1- 202005 003 498
- FR-A1- 2 879 890
- FR-A5- 2 067 438
- US-A- 5 168 692

## Beschreibung

Die Erfindung betrifft ein Verfahren zum Aufsammeln von Fallobst und ähnlichen Gegenständen vom Boden mit einem Sammelwagen, bei dem der Sammelwagen in einer Fahrtrichtung über den Boden bewegt wird, wobei das Fallobst durch eine Aufnahmewalze entgegen der Fahrtrichtung beschleunigt und auf einen Leitrost gefördert wird, und letztlich vom Leitrost in einen Sammelkorb geführt wird, wobei das Fallobst vor dem Sammelkorb durch eine Abstreifeinrichtung geworfen wird, um Fremdkörper abzuscheiden.

Als Fallobst im Sinn der vorliegenden Erfindung sind allgemein landwirtschaftliche Produkte gemeint, die am Boden liegen, wie etwa Äpfel, Birnen, Walnüsse, Haselnüsse usw. Es ist aber auch denkbar, andere Gegenstände, wie etwa Pferdekot, Müll oder Golfbälle mit dem erfindungsgemäßen Verfahren zu sammeln. In der Folge wird zur Erhöhung der Klarheit der Begriff Fallobst allgemein für die aufzusammelnden Produkte verwendet.

Aus der AT 519 464 B ist eine Vorrichtung bekannt, mit der es möglich ist, am Boden liegendes Fallobst weitgehend schonend aufzusammeln. Dabei werden am vorderen Ende des Sammelwagens die einzelnen Stücke durch eine Sammelwalze mit Paddeln angestoßen und nach hinten bewegt. Die Paddel streifen dabei über den Boden und werden dabei je nach Kontur des Bodens und der Höhe der Aufnahmewalze verformt. Unmittelbar im Anschluss an die Aufnahmewalze ist ein Leitrost vorgesehen, der leicht ansteigend ausgeführt ist. Das Fallobst bewegt sich dank seiner Trägheit ohne weiteren Antrieb im Wesentlichen rollend nach hinten und oben und wird in einem Sammelkorb aufgenommen.

Auch wenn diese Vorrichtung und das damit ausgeführte Verfahren an sich zufriedenstellend sind, besteht das Problem, dass Fremdkörper wie Gras, Blätter und Äste, aber beispielsweise auch Kunststofffolien oder dgl. gemeinsam mit dem Fallobst aufgenommen werden und dieses verunreinigen. Teilweise werden solche Fremdkörper auch bei der bekannten Vorrichtung abgeschieden, weil sie durch den Leitrost hindurchfallen. Dieser Effekt ist jedoch unzureichend und insbesondere können so Fremdkörper mit größeren Abmessungen nicht abgeschieden werden. Dieser Nachteil ist umso gravierender, als die Vorrichtung möglichst universell einsetzbar sein soll, so dass der Leitrost eine relativ kleine Teilung aufweisen muss, um auch für kleine Stücke von Fallobst geeignet zu sein.

Die US 4,982,559 A beschreibt eine einschlägige Vorrichtung, bei der Nüsse durch eine Aufnahmewalze beschleunigt und auf ein Prallblech gefördert werden. Es kann eine Bürste vorgesehen sein, die von den Nüssen passiert wird, die jedoch Fremdkörper zurückhält. Die zurückgehaltenen Fremdkörper können sich jedoch am Prallblech ansammeln und die Funktion beeinträchtigen.

Aus der US 5,168,692 A ist eine Vorrichtung zur Ernte von Nüssen bekannt, bei denen die Nüsse in einer Aufnahmewalze festgeklemmt werden und danach durch einen in die Aufnahmewalze ragenden Kamm abgestreift werden und in einen Aufnahmekorb fallen. Eine solche Vorrichtung ist für robuste Gegenstände wie Nüsse geeignet, nicht jedoch für Obst, wie etwa Äpfel o.dgl..

Aufgabe der vorliegenden Erfindung ist es, diese Nachteile zu vermeiden und ein Verfahren anzugeben, mit dem eine schonende und effiziente Sammlung von Fallobst möglich ist, wobei eine möglichst große Freiheit von Fremdkörpern gewährleistet ist. Insbesondere sollen nicht nur Fremdkörper, die kleiner sind als das Fallobst, wie etwa Gras oder Steinchen, sondern auch Blätter und Äste abgeschieden werden.

Erfindungsgemäß wird dies durch ein Verfahren erreicht, bei dem das Fallobst nach dem Leitrost über einen Spalt in den Sammelkorb geworfen wird. Die Fremdkörper können dadurch unbehindert nach unten abfallen. Auf diese Weise kann es auch nicht zu Verstopfungen oder dgl. kommen, wenn eine größere Menge an Fremdkörpern vorliegt.

Es ist ein wichtiger Aspekt der Erfindung, dass das Fallobst nicht nur rollend oder gleitend über den Leitrost in den Sammelkorb bewegt wird, sondern auch eine gewisse Strecke im freien Flug zurücklegt. Dabei durchquert das Fallobst eine Abstreifeinrichtung, die anhaftende Fremdkörper abstreift, ohne die Flugbahn des Fallobstes allzu stark zu beeinflussen. Dadurch wird sichergestellt, dass das aufzusammelnde Fallobst in weitaus überwiegendem Ausmaß den Sammelkorb erreicht.

Vorzugsweise wird das Fallobst am Leitrost nur durch seine Trägheit bewegt. Das bedeutet, dass im Bereich des Leitrostes keine weitere Antriebsvorrichtung für das Fallobst erforderlich ist.

Eine besonders begünstigte Variante des erfindungsgemäßen Verfahrens sieht vor, dass die Aufnahmewalze motorisch angetrieben wird. Insbesondere ist dieser Antrieb dabei unabhängig von der Bewegung der Vorrichtung selbst. Insbesondere dann, wenn der Sammelwagen händisch bewegt wird, erfolgt auf diese Weise eine gewisse Unterstützung der Person, die den Sammelwagen bewegt.

Der wesentliche Vorteil der vorliegenden Erfindung besteht darin, dass Fremdkörper abgeschieden werden, ohne die schonende Behandlung des Fallobsts aufzugeben. Überdies wird eine leichte Bedienbarkeit für die Person erreicht, die das Verfahren ausführt.

Die vorliegende Erfindung betrifft auch einen Sammelwagen zum Aufsammeln von Fallobst und ähnlichen landwirtschaftlichen Produkten vom Boden, der folgende Bauteile aufweist: ein Fahrgestell mit mindestens zwei Rädern, eine antreibbare Aufnahmewalze mit mehreren biegeelastischen Paddeln zur Beschleunigung des Fallobsts, einen Leitrost, auf dem das Fallobst weiterbewegt wird, und einen Sammelkorb zur Aufnahme des Fallobsts, wobei eine Abstreifeinrichtung vorgesehen ist, durch die das Fallobst hindurchgefördert wird, um Fremdkörper abzuscheiden.

Erfindungsgemäß ist dieser Sammelwagen dadurch gekennzeichnet, dass zwischen dem Leitrost und dem Sammelkorb ein nach unten offener Spalt vorgesehen ist. Dadurch können abgestreifte Fremdkörper problemlos nach unten abfallen und das Fallobst unmittelbar danach vom Sammelkorb aufgenommen werden. Diese Variante ist auch konstruktiv besonders einfach ausgebildet.

Es ist bevorzugt, wenn das Fahrgestell eine einzelne Achse mit zwei Rädern aufweist. Dadurch ist es für die Bedienungsperson leicht möglich, das Fahrgestell je nach Bedarf nach vorne oder hinten zu kippen, so dass die Aufnahmewalze mehr oder weniger stark auf den Boden gedrückt wird. Damit kann in sehr einfacher Weise die Funktion in Abhängigkeit von den jeweiligen Arbeitsbedingungen optimiert werden. Alternativ sind auch Varianten mit mehreren Achsen denkbar, wenn durch entsprechende Maßnahmen eine Höhenverstellbarkeit der Aufnahmewalze erreicht wird. Lediglich der Aufbau des Sammelwagens ist in diesem Fall aufwändiger.

An sich ist es möglich, dass die Aufnahmewalze beispielsweise über ein Getriebe durch die Räder oder gemeinsam mit den Rädern angetrieben wird. Besonders bevorzugt ist es dabei jedoch, wenn ein Elektromotor zum Antrieb der Aufnahmewalze vorgesehen ist. Die Energieversorgung kann über Akkumulatoren erfolgen. Dadurch kann die Drehzahl der Aufnahmewalze unabhängig von der Bewegungsgeschwindigkeit des Sammelwagens geregelt werden. Durch den Kontakt mit dem Boden wird dabei überdies eine Unterstützung des Antriebs des Sammelwagens erreicht, deren Intensität durch die Bedienungsperson im Betrieb leicht durch Veränderung der Höhe der Aufnahmewalze gesteuert werden kann.

Es ist besonders günstig, wenn die biegeelastischen Paddel im Wesentlichen in Radialrichtung angeordnet sind. Damit kann eine besonders effiziente Impulsübertragung auf das Fallobst erreicht werden. Es kann dadurch bei entsprechender Auslegung jedenfalls ein minimaler Impuls gewährleistet werden, der erforderlich ist, damit das Fallobst die Flugstrecke durch die Abstreifeinrichtung überwinden kann.

Es ist auch möglich, dass der Leitrost zweiteilig ausgebildet ist und zwischen dem ersten und dem zweiten Teil ein nach unten offener Spalt vorgesehen ist. Am Ende dieses Spalts ist wiederum eine Abstreifvorrichtung vorgesehen. Dies bedeutet, dass das Fallobst nach der Abstreifeinrichtung noch eine geringe Wegstrecke am zweiten Teil des Leitrostes geführt wird. Der Vorteil dieser Variante liegt darin, dass eine Anpassung der Geometrie an die Flugstrecke unabhängig vom Füllungsgrad des Sammelkorbes so vorgenommen werden kann, dass ein harter Aufprall des Fallobstes sicher vermieden werden kann, so dass dieses durch die Ernte möglichst wenig beschädigt wird.

Eine besonders begünstigte Ausführungsvariante der vorliegenden Erfindung sieht vor, dass der Leitrost schwenkbar ausgebildet ist. Wenn die Aufnahmekante des Leitrosts auf ein Hindernis stößt, wie etwa kleine Erdhügel oder Unebenheiten des Geländes, kann jener wegschwenken, so dass das Hindernis überwunden werden kann. In diesem Zusammenhang ist es besonders günstig, wenn die Schwenkachse des Leitrosts im Bereich der Aufnahmewalze oberhalb und in Fahrtrichtung vor einer Aufnahmekante des Leitrosts angeordnet ist. Dadurch wird erreicht, dass der Leitrost nach hinten und oben wegschwenkt, wodurch das Hinderns leicht überwunden werden kann.

Eine besonders schonende Behandlung des Fallobsts kann dadurch erreicht werden, dass der Leitrost abschnittsweise eben und vorzugsweise tangential zum Umfang der Aufnahmewalze ausgebildet ist. Gekrümmte Abschnitte des Leitrosts können eine schonendere Behandlung des Fallobsts ermöglichen.

Es hat sich auch als günstig herausgestellt, wenn der Leitrost eine Aufnahmekante aufweist, die im unbelasteten Zustand oberhalb einer gemeinsamen Tangente von Rädern und der Aufnahmewalze angeordnet ist. Im Betrieb wird der Vorderteil des Sammelwagens so weit abgesenkt, dass die Aufnahmekante den Boden berührt. Auf diese Weise wird sichergestellt, dass die Paddel der Aufnahmewalze stets einen guten Kontakt zum Boden haben und ihre Paddel beim Bodenkontakt leicht vorgespannt werden.

Ein benutzerfreundlicher händischer Betrieb wird dadurch erreicht, dass Handgriffe vorgesehen sind, die an dem der Aufnahmewalze gegenüberliegenden Ende des Fahrgestells angeordnet sind. Damit können einerseits die Lenkung und andererseits die Schwenkbewegung um die Achse der Räder durch die den Sammelwagen benutzende Person durch die Handhabung der Handgriffe ausgeführt werden, wodurch eine intuitive Bedienung erreicht wird.

Es ist bevorzugt, wenn die Abstreifeinrichtung als Leiste mit nach oben ragenden Borsten ausgebildet ist. Besonders vorteilhaft ist dabei, dass die sich durch den Impuls des Fallobsts nach hinten biegenden Borsten dieses sanft in den Sammelkorb geführt.

Alternativ ist es möglich, dass die Abstreifeinrichtung als Vorhang aus von einer Aufhängung nach unten hängenden Fäden oder Lamellen ausgebildet ist. Die Aufhängung kann im einfachsten Fall als Querstange ausgebildet sein. Dadurch kann der Widerstand minimiert werden, der dem Fallobst beim Durchtritt entgegengesetzt wird.

Es hat sich ferner als günstig herausgestellt, wenn die Paddel aus Kunststoff im Spritzgussverfahren hergestellt sind. Dadurch wird eine robuste und langlebige Ausführung erreicht.

Es ist wichtig, dass auch dann, wenn der Sammelkorb bereits gefüllt ist, der Schwerpunkt des Sammelwagens vor den Rädern liegt, so dass auch ohne Krafteinwirkung durch die Bedienungsperson schon ein gewisser Anpressdruck der Aufnahmewalze auf den Boden erreicht wird. Eine besonders gut ausbalancierte Ausführung in diesem Sinn wird erreicht, wenn ein Akkumulator oberhalb des Sammelkorbs angeordnet ist.

In der Folge wird die vorliegende Erfindung anhand der in den Figuren dargestellten Ausführungsbeispiele näher erläutert. Es zeigen:
- Fig. 1: eine Schrägansicht eines erfindungsgemäßen Sammelwagens;
- Fig. 2: den Sammelwagen von Fig. 1 mit teilweise weggeblendeten Bauteilen;
- Fig. 3: den Sammelwagen von Fig. 1 mit weiteren weggeblendeten Bauteilen;
- Fig. 4: den Sammelwagen von Fig. 1 bis Fig. 3 in einer Seitenansicht;
- Fig. 5: ein Detail einer alternativen Ausführungsvariante;
- Fig. 6: ein weiteres alternatives Detail; und
- Fig. 7: ein weiteres Detail.

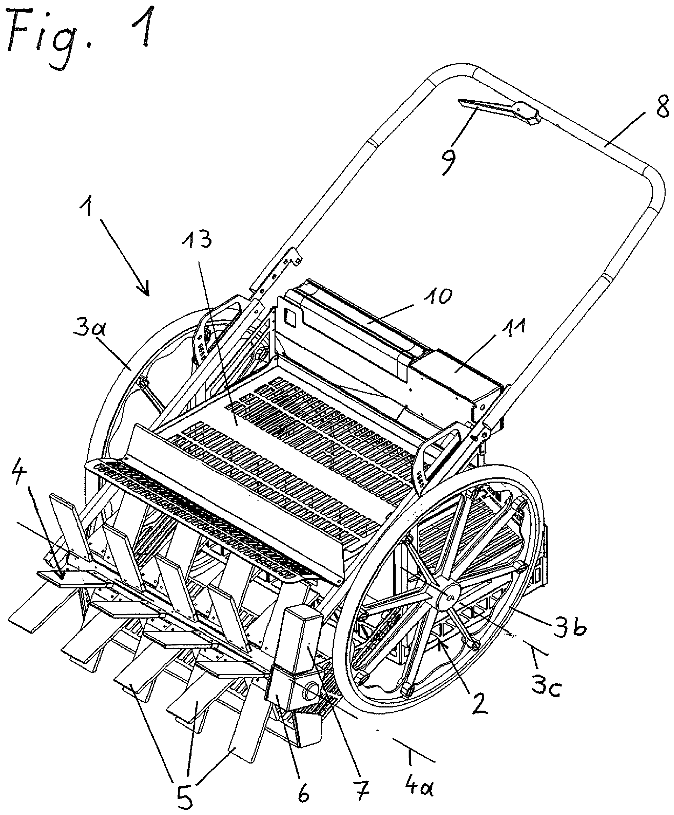

In Fig. 1 ist der erfindungsgemäße Sammelwagen 1 in seiner Gesamtheit dargestellt. An einem Fahrgestell 2 sind seitlich zwei Räder 3a, 3b angebracht, auf denen der Sammelwagen 1 bewegt werden kann. Die Räder 3a, 3b sind entweder auf einer gemeinsamen Drehachse 3c angeordnet oder besitzen einen geringfügigen Sturz, so dass die Drehachsen der Räder 3a, 3b einen kleinen Winkel zueinander aufweisen.

An der Vorderseite ist eine Aufnahmewalze 4 angebracht, deren Drehachse 4a quer zur Fahrtrichtung ist. Die Aufnahmewalze 4 besitzt mehrere radial abstehende Paddel 5, die in unbelastetem Zustand jeweils in einer Ebene liegen, die die Drehachse 4a der Aufnahmewalze 4 enthält. Die Paddel 5 sind aus einem vorzugsweise flexiblen Kunststoff hergestellt, so dass sie sich krümmen können, wenn der Sammelwagen 1 so weit nach vorne gekippt wird, dass die Aufnahmewalze 4 auf den Boden gedrückt wird.

Die Aufnahmewalze 4 ist über einen Elektromotor 7 angetrieben, der vorzugsweise als Getriebemotor ausgeführt ist, d.h., dass direkt am Elektromotor 7 ist ein Getriebe 6 angeflanscht ist.

Ein Handgriff 8 dient dazu, den Sammelwagen 1 zu bewegen und zu lenken. Gleichzeitig kann durch Heben und Senken des Handgriffs 8 der Anpressdruck der Aufnahmewalze 4 auf den Boden gesteuert werden, oder bei Bedarf diese vom Boden abgehoben werden. Am Handgriff 8 ist auch ein Schalter 9 angebracht, mit dem die Drehung der Aufnahmewalze 4 gesteuert werden kann.

Oberhalb der Räder 3a, 3b ist der Akkumulator 10 angeordnet. In einem Gehäuse 11 ist die erforderliche Steuerungselektronik für den Elektromotor 7 aufgenommen.

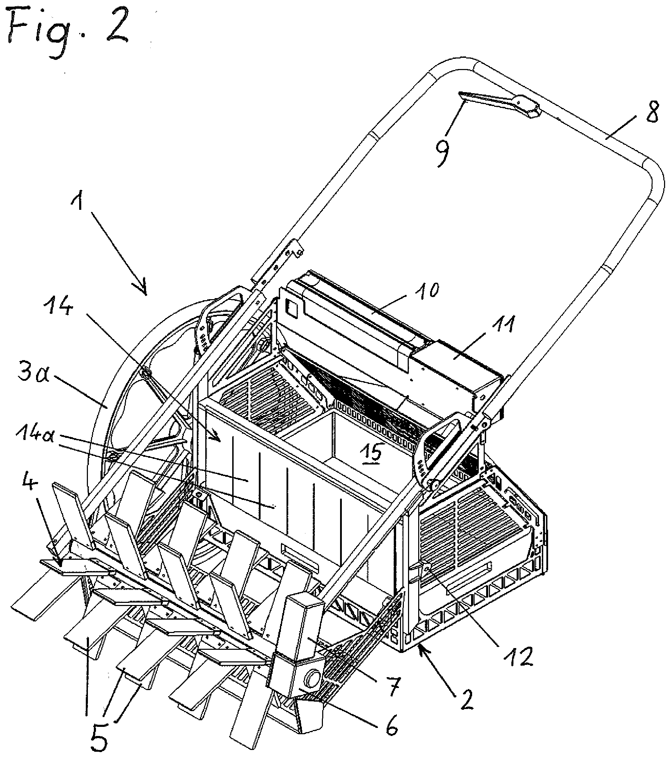

In Fig. 2 sind ein Rad 3b und die obere Abdeckung 13 weggelassen, um die übrigen Bauteile besser sichtbar zu machen. Es ist die Aufnahme 12 für das nicht dargestellte Rad 3b ersichtlich. Hinter einer Abstreifeinrichtung 14 ist ein Sammelkorb 15 auf das Fahrgestell 2 aufgesetzt, der zur Entleerung nach hinten entnommen werden kann. Die Abstreifeinrichtung 14 ist bei dieser Ausführungsvariante aus mehreren nach unten hängenden Lamellen 14a zusammengesetzt, die einen Vorhang bilden, der Fremdkörper abstreift.

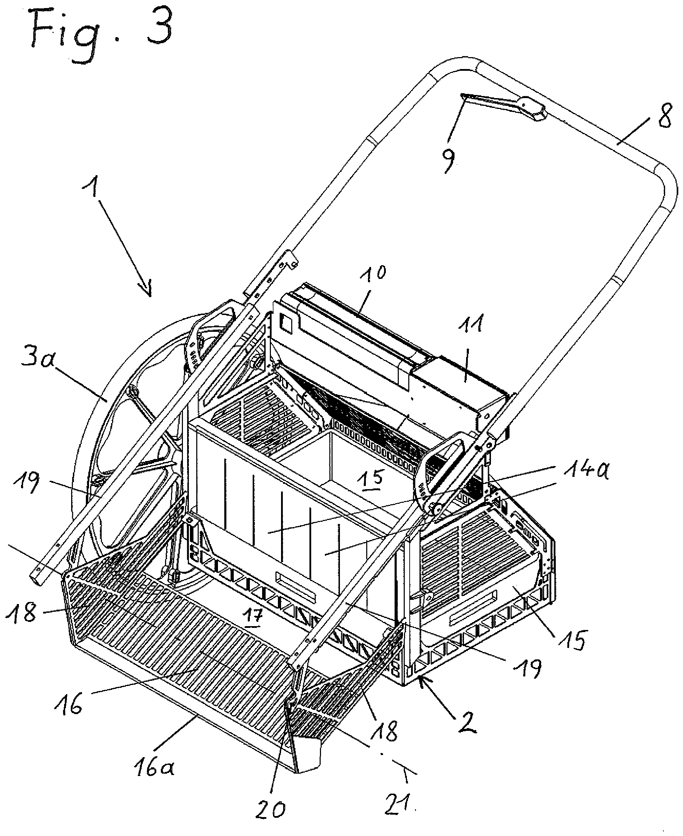

In Fig. 3 ist zusätzlich auch noch die Aufnahmewalze 4 weggelassen, um die Darstellung zu verbessern. Unmittelbar hinter der Aufnahmewalze 4 ist ein Leitrost 16 angeordnet, der sich von einer Aufnahmekante 16a, die im Betriebszustand am Boden aufliegt, nach hinten ansteigend erstreckt. Hinter dem Leitrost 16 ist ein Spalt 17 vorgesehen, an den die Abstreifeinrichtung 14 anschließt. Seitenwangen 18 verhindern das seitliche Austreten des aufgesammelten Fallobsts.

Der Leitrost 16 ist auf Haltestangen 19 des Fahrgestells 2 schwenkbar gelagert, wobei die Schwenkachse 21, die durch die gedachte Verbindung von zwei Schwenklagern 20 gebildet ist, im Wesentlichen oberhalb und geringfügig vor der Aufnahmekante 16a angeordnet ist. Beim Auftreffen auf ein Hindernis kann der Leitrost 16 somit in einer Schwenkbewegung ausweichen.

Der Sammelkorb 15 ist nach oben hin durch eine Abdeckung 13 abgedeckt, die in dieser Ausführung als Gitter ausgebildet ist.

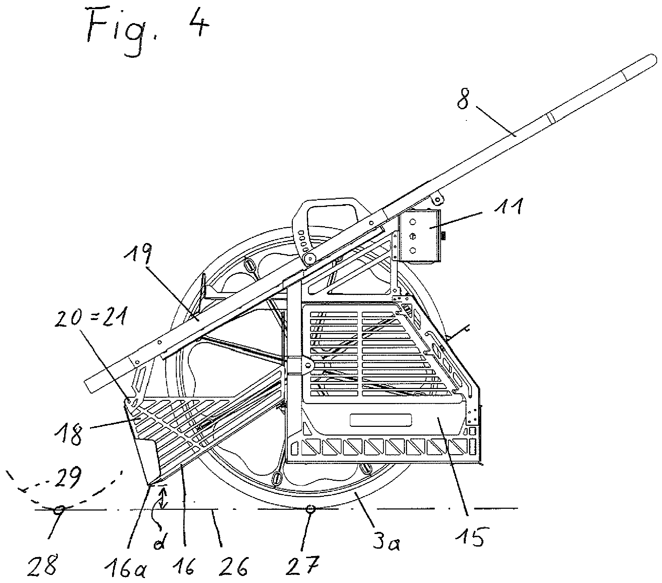

Aus Fig. 4 ist ersichtlich, dass in der seitlichen Ansicht die gemeinsame Tangente 26 an die Räder 3a, 3b in Punkt 27 und die Einhüllende 29 der Aufnahmewalze 4 im Punkt 28 so gelegen ist, dass die Aufnahmekante 16a des Leitrosts 16 oberhalb von ihr gelegen ist. Der Abstand d beträgt vorzugsweise zwischen 5% und 20% des Durchmessers der Einhüllenden 29 der Aufnahmewalze 4. Diese Angaben beziehen sich auf einen Zustand mit nicht verformten Paddeln.

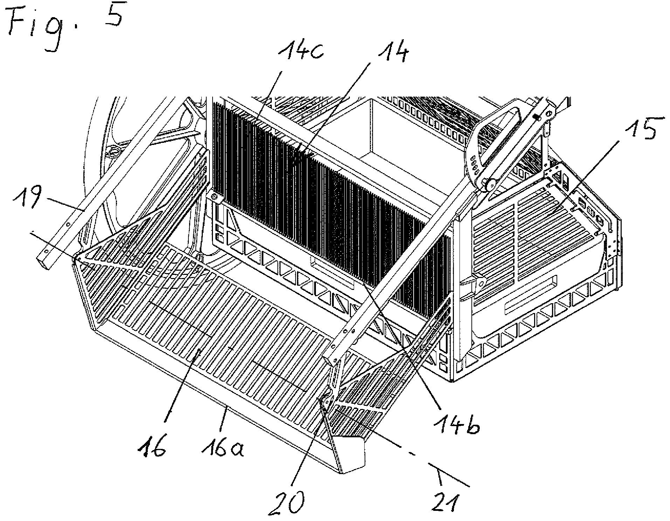

In der Ausführungsvariante von Fig. 5 ist die Abstreifeinrichtung 14 als Leiste 14b mit einer Vielzahl von nach oben ragenden Borsten 14c in der Art eines Besens ausgebildet.

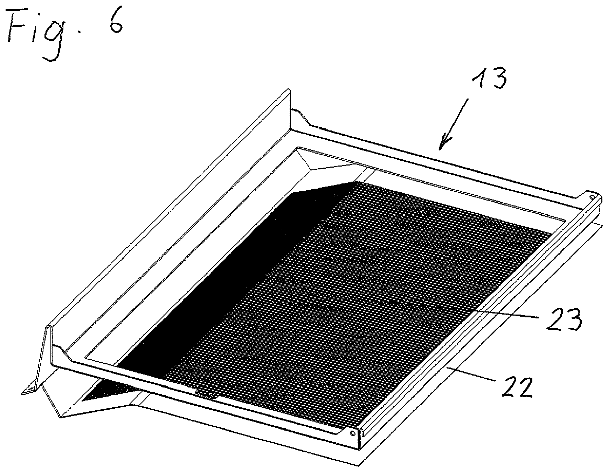

Fig. 6 zeigt eine Variante einer Abdeckung 13, die aus einem Rahmen 22 mit einem darin gespannten Netz 23 besteht. Durch die Flexibilität des Netzes 23 wird das darauf prallende Fallobst besonders schonend abgebremst und damit vor Beschädigung geschützt.

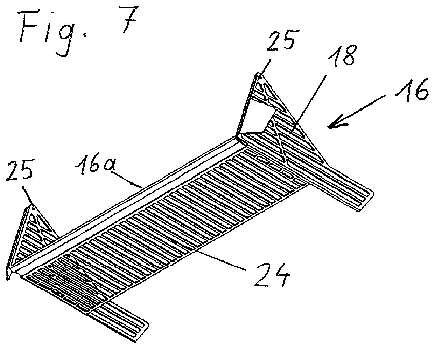

In Fig. 7 ist ein Leitrost 16 im Detail dargestellt. Ein ebener Hauptabschnitt 24 besitzt an seiner Vorderkante eine Aufnahmekante 16a. An der Oberseite der Seitenwangen 18 sind Aufhängungen 25 zur Befestigung an den Schwenklagern 20 vorgesehen. Es ist auch möglich, den Leitrost 16 leicht gekrümmt auszubilden, um die Bewegung des Fallobsts zu optimieren.

Die vorliegende Erfindung ermöglicht es, Fallobst und anderes stückiges Sammelgut effizient und schonend vom Boden aufzusammeln. Dabei können Fremdkörper weitgehend abgeschieden werden, so dass das Sammelgut frei von Verunreinigungen gewonnen werden kann.

## Patentansprüche

1. Verfahren zum Aufsammeln von Fallobst und ähnlichen Gegenständen vom Boden mit einem Sammelwagen (1), bei dem der Sammelwagen (1) in einer Fahrtrichtung über den Boden bewegt wird, wobei das Fallobst durch eine Aufnahmewalze (4) entgegen der Fahrtrichtung beschleunigt und auf einen Leitrost (16) gefördert wird, und letztlich vom Leitrost (16) in einen Sammelkorb (15) geführt wird, wobei das Fallobst vor dem Sammelkorb (15) durch eine Abstreifeinrichtung (14) geworfen wird, um Fremdkörper abzuscheiden, **dadurch gekennzeichnet, dass** das Fallobst nach dem Leitrost (16) über einen Spalt (17) in den Sammelkorb (15) geworfen wird.

2. Verfahren nach Anspruch 1, **dadurch gekennzeichnet, dass** das Fallobst am Leitrost (16) nur durch seine Trägheit bewegt wird.

3. Verfahren nach einem der Ansprüche 1 oder 2, **dadurch gekennzeichnet, dass** die Aufnahmewalze (4) motorisch angetrieben wird.

4. Verfahren nach einem der Ansprüche 1 bis 3, **dadurch gekennzeichnet, dass** der Sammelwagen (1) händisch bewegt wird.

5. Sammelwagen (1) zum Aufsammeln von Fallobst und ähnlichen landwirtschaftlichen Produkten vom Boden, der folgende Bauteile aufweist: ein Fahrgestell (2) mit mindestens zwei Rädern (3a, 3b), eine antreibbare Aufnahmewalze (4) mit mehreren vorzugsweise biegeelastischen Paddeln (5) zur Beschleunigung des Fallobsts, einen Leitrost (16), auf dem das Fallobst weiterbewegt wird, und einen Sammelkorb (15) zur Aufnahme des Fallobsts, wobei eine Abstreifeinrichtung (14) vorgesehen ist, durch die das Fallobst hindurchgefördert wird, um Fremdkörper abzuscheiden, **dadurch gekennzeichnet, dass** zwischen dem Leitrost (16) und dem Sammelkorb (15) ein nach unten offener Spalt (17) vorgesehen ist

6. Sammelwagen (1) nach Anspruch 5, **dadurch gekennzeichnet, dass** das Fahrgestell (2) eine einzelne Drehachse (3c) mit zwei Rädern (3a, 3b) aufweist.

7. Sammelwagen (1) nach einem der Ansprüche 5 oder 6, **dadurch gekennzeichnet, dass** ein Elektromotor (7) zum Antrieb der Aufnahmewalze (4) vorgesehen ist.

8. Sammelwagen (1) nach einem der Ansprüche 5 bis 7, **dadurch gekennzeichnet, dass** die vorzugsweise biegeelastischen Paddel (5) im Wesentlichen in Radialrichtung der Aufnahmewalze (4) angeordnet sind.

9. Sammelwagen (1) nach einem der Ansprüche 5 bis 8, **dadurch gekennzeichnet, dass** der Leitrost (16) zweiteilig ausgebildet ist und zwischen dem ersten und dem zweiten Teil ein nach unten offener Spalt (17) vorgesehen ist.

10. Sammelwagen (1) nach einem der Ansprüche 5 bis 9, **dadurch gekennzeichnet, dass** der Leitrost (16) schwenkbar ausgebildet ist.

11. Sammelwagen (1) nach Anspruch 10, **dadurch gekennzeichnet, dass** die Schwenkachse (21) des Leitrosts (16) im Bereich der Aufnahmewalze (4) oberhalb und in Fahrtrichtung vor einer Aufnahmekante (16a) des Leitrosts (16) angeordnet ist.

12. Sammelwagen (1) nach einem der Ansprüche 6 bis 11, **dadurch gekennzeichnet, dass** der Leitrost (16) abschnittsweise eben und vorzugsweise tangential zum Umfang der Aufnahmewalze (4) ausgebildet ist.

13. Sammelwagen (1) nach einem der Ansprüche 6 bis 12, **dadurch gekennzeichnet, dass** der Leitrost (16) eine Aufnahmekante (16a) aufweist, die im unbelasteten Zustand oberhalb einer gemeinsamen Tangente (26) von Rädern (3a, 3b) und der Aufnahmewalze (4) angeordnet ist.

14. Sammelwagen (1) nach einem der Ansprüche 6 bis 13, **dadurch gekennzeichnet, dass** die Abstreifeinrichtung (14) als Vorhang aus von einer Querstange nach unten hängenden Fäden oder Lamellen (14a) ausgebildet ist.

15. Sammelwagen (1) nach einem der Ansprüche 6 bis 14, **dadurch gekennzeichnet, dass** die Abstreifeinrichtung (14) als Leiste mit nach oben ragenden Borsten ausgebildet ist.

## Claims

1. Method for collecting windfall fruit and similar objects from the ground with a collecting carriage (1), in which the collecting carriage (1) is moved over the ground in a direction of travel, wherein the windfall fruit is accelerated by a pick-up roller (4) counter to the direction of travel and conveyed onto a guide grid (16), and is finally guided from the guide grid (16) into a collecting basket (15), wherein the windfall fruit is thrown through a stripping device (14) upstream of the collecting basket (15) in order to separate out foreign bodies, **characterised in that** the windfall fruit is thrown into the collecting basket (15) after the guide grid (16) via a gap (17).

2. Method according to claim 1, **characterised in that** the windfall fruit is moved on the guide grate (16) only by its inertia.

3. Method according to one of claims 1 or 2, **characterised in that** the pick-up roller (4) is motor-driven.

4. Method according to one of claims 1 to 3, **characterised in that** the collecting carriage (1) is moved manually.

5. Collecting carriage (1) for collecting windfall fruit and similar agricultural products from the ground, comprising the following components: a chassis (2) having at least two wheels (3a, 3b), a drivable pick-up roller (4) having a plurality of preferably flexurally elastic paddles (5) for accelerating the windfall fruit, a guide grid (16) on which the windfall fruit is moved on, and a collecting basket (15) for receiving the windfall fruit, wherein a stripping device (14) is provided, through which the fallen fruit is conveyed in order to separate out foreign bodies, **characterised in that** a downwardly open gap (17) is provided between the guide grid (16) and the collecting basket (15)

6. Collecting carriage (1) according to claim 5, **characterised in that** the chassis (2) has a single axis of rotation (3c) with two wheels (3a, 3b).

7. Collecting carriage (1) according to one of claims 5 or 6, **characterised in that** an electric motor (7) is provided for driving the pick-up roller (4).

8. Collecting carriage (1) according to one of claims 5 to 7, **characterised in that** the preferably flexurally elastic paddles (5) are arranged essentially in the radial direction of the pick-up roller (4).

9. Collecting carriage (1) according to one of claims 5 to 8, **characterised in that** the guide grid (16) is designed in two parts and a downwardly open gap (17) is provided between the first and the second part.

10. Collecting carriage (1) according to one of claims 5 to 9, **characterised in that** the guide grid (16) is designed to be pivotable.

11. Collecting carriage (1) according to claim 10, **characterised in that** the pivot axis (21) of the guide grid (16) is arranged in the region of the pick-up roller (4) above and in front of a pick-up edge (16a) of the guide grid (16) in the direction of travel.

12. Collecting carriage (1) according to one of claims 6 to 11, **characterised in that** the guide grid (16) is designed to be flat in sections and preferably tangential to the circumference of the pick-up roller (4).

13. Collecting carriage (1) according to one of claims 6 to 12, **characterised in that** the guide grid (16) has a receiving edge (16a) which, in the unloaded state, is arranged above a common tangent (26) of wheels (3a, 3b) and the pick-up roller (4).

14. Collecting carriage (1) according to one of claims 6 to 13, **characterised in that** the stripping device (14) is designed as a curtain of threads or slats (14a) hanging downwards from a crossbar.

15. Collecting carriage (1) according to one of claims 6 to 14, **characterised in that** the stripping device (14) is designed as a strip with upwardly projecting bristles.

## Revendications

1. Procédé de récolte de fruits tombés ou objets analogues sur le sol avec un chariot collecteur (1), selon lequel
- on déplace le chariot collecteur (1) dans une direction de circulation sur le sol,
- on accélère le fruit tombé avec un cylindre collecteur (4) dans la direction opposée à la direction de circulation et on le transfère sur une grille de guidage (16) et, finalement, on le fait passer de la grille de guidage (16) dans un panier collecteur (15),
- le fruit tombé étant projeté en amont du panier collecteur (15) à travers un dispositif de raclage (14) pour séparer les corps étrangers,
procédé **caractérisé en ce que**
après la grille de guidage (16) on projette le fruit par-dessus un intervalle (17) dans le panier collecteur (15).

2. Procédé selon la revendication 1,
**caractérisé en ce que**
le fruit est déplacé sur la grille de guidage (16) uniquement par son inertie.

3. Procédé selon l'une des revendications 1 ou 2,
**caractérisé en ce que**
le cylindre collecteur (4) est entraîné par un moteur.

4. Procédé selon l'une des revendications 1 à 3,
**caractérisé en ce que**
le chariot collecteur (1) est déplacé à la main.

5. Chariot collecteur (1) pour récolter des fruits tombés ou produits agricoles analogues, du sol, comprenant les composants suivants : un châssis (2) avec au moins deux roues (3a, 3b), un cylindre collecteur (4), entraîné, à plusieurs palettes (5), de préférence élastiques souples pour accélérer le fruit tombé, une grille de guidage (16) sur laquelle se déplace le fruit tombé et un panier collecteur (15) pour recevoir le fruit,
- un dispositif de raclage (14) étant prévu à travers lequel on fait passer le fruit pour séparer les corps étrangers,
chariot **caractérisé par**
un intervalle (17) ouvert vers le bas entre la grille de guidage (16) et le panier collecteur (15).

6. Chariot-collecteur (1) selon la revendication 5,
**caractérisé en ce que**
le châssis (2) a un axe de rotation unique (3c) avec deux palettes (3a, 3b).

7. Chariot-collecteur (1) selon l'une des revendications 5 ou 6,
**caractérisé par**
un moteur électrique (7) pour entraîner le cylindre collecteur (4).

8. Chariot-collecteur (1) selon l'une des revendications 5 à 7,
**caractérisé en ce que**
les palettes (5) de préférence élastiques souples sont installées pratiquement dans la direction radiale du cylindre récepteur (4).

9. Chariot-collecteur (1) selon l'une des revendications 5 à 8,
**caractérisé en ce que**
la grille de guidage (16) est en deux parties et un intervalle (17) ouvert vers le bas est prévu entre la première et la seconde partie.

10. Chariot-collecteur (1) selon l'une des revendications 5 à 9,
**caractérisé en ce que**
la grille de guidage (16) est basculante.

11. Chariot-collecteur (1) selon la revendication 10,
**caractérisé en ce que**
l'axe de basculement (21) de la grille de guidage (16) est dans la zone du cylindre collecteur (4) au-dessus de la grille de guidage (16) et en amont de l'arête réceptrice (16a) de la grille dans la direction de circulation.

12. Chariot-collecteur (1) selon l'une des revendications 6 à 11,
**caractérisé en ce que**
par segment, la grille de guidage (16) est plane et, de préférence, tangente à la périphérie du cylindre collecteur (4).

13. Chariot-collecteur (1) selon l'une des revendications 6 à 12,
**caractérisé en ce que**
la grille de guidage (16) a une arête de prise (16a) qui, à l'état non chargé, est au-dessus d'une tangente commune (26) aux roues (3a ; 3b) et au cylindre récepteur (4).

14. Chariot-collecteur (1) selon l'une des revendications 6 à 13,
**caractérisé en ce que**
le dispositif de raclage (14) est sous la forme d'un rideau composé d'une tige transversale et de fils ou de lamelles (14a) suspendus.

15. Chariot-collecteur (1) selon l'une des revendications 6 à 14,
**caractérisé en ce que**
le dispositif de raclage (14) est une lame avec des brosses tournées vers le haut.
